# FASCICULE DE BREVET EUROPEEN

(11) **EP 3 606 804 B1**
(45) Date de publication et mention de la délivrance du brevet: **24.01.2024**
(21) Numéro de dépôt: 18714820.0
(22) Date de dépôt: 06.03.2018
(51) Int. Cl.: B62D 21/09, B62D 21/10, B62D 21/18, B62D 25/20

(54) **CHASSIS D'UN VEHICULE AUTOMOBILE UTILITAIRE, MUNI DE RENFORTS D'UN PLANCHER-CABINE FORMANT UNE INTERFACE DE FIXATION D'UNE CELLULE MONTEE SUR LE CHASSIS**
FAHRGESTELL FÜR EIN NUTZKRAFTFAHRZEUG MIT VERSTÄRKUNGEN EINES KABINENBODENS ZUR BILDUNG EINER SCHNITTSTELLE ZUR BEFESTIGUNG EINER AUF DEM FAHRGESTELL MONTIERTEN ZELLE
CHASSIS FOR A UTILITY MOTOR VEHICLE, PROVIDED WITH REINFORCEMENTS OF A CABIN FLOOR FORMING AN INTERFACE FOR THE ATTACHMENT OF A CELL MOUNTED ON THE CHASSIS

(30) Priorité: 05.04.2017 FR 1752940
(43) Date de publication de la demande: 12.02.2020
(73) Titulaire: Stellantis Auto SAS, 78300 Poissy (FR)
(72) Inventeur: BENANE, Said, 94550 Chevilly Larue (FR)
(86) Numéro de dépôt international: PCT/FR2018/050502
(87) Numéro de publication internationale: WO 2018/185387

(56) Documents cités:
- EP-A1- 0 035 449
- WO-A1-2004/020268
- JP-A- S5 563 971
- US-A- 2 743 940
- US-A- 3 520 551

## Description

La présente invention relève du domaine des véhicules de type utilitaires configurés pour le transport de charges, comprenant un châssis sur lequel est installée une cellule rigide abritant les charges. L'invention relève plus particulièrement des modalités de renfort d'un plancher-cabine que comprend un tel châssis et/ou des modalités de fixation de la cellule sur le châssis.

Les véhicules utilitaires sont configurés pour le transport de charges et comprennent un châssis roulant porteur d'une cabine et d'une cellule rigide. La cabine est installée sur le châssis à l'avant du véhicule et ménage un habitacle pour le conducteur. La cellule est installée à l'arrière du véhicule et ménage un local de réception de marchandises à transporter et/ou un local technique ou de loisirs selon des utilisations spécifiques du véhicule utilitaire.

Le châssis comprend un soubassement porteur d'une plateforme sur laquelle la cellule est installée. Le soubassement comprend communément des longerons et/ou des traverses ménageant un plan de soutien de la plateforme. Cependant, les architectures traditionnelles d'un tel châssis présentent l'inconvénient d'alourdir le véhicule, ce qu'il est souhaitable d'éviter.

Pour alléger le véhicule, il est connu un agencement particulier de la plateforme communément désigné par plancher-cabine. Un plancher-cabine est essentiellement formé d'une tôle qui est fixée en zone avant sur une ossature de montage de la cabine et qui est fixée en zone arrière sur le châssis.

Il se pose dès lors le problème de la résistance de la tôle à l'encontre de sa déformation, compte tenu des charges lourdes destinées à être embarquées sur le véhicule. Notamment en cas de prise d'un virage, le véhicule est soumis à un roulis et le plancher-cabine est alors mis en contrainte en torsion.

En outre pour optimiser le volume utile de la cellule malgré la recherche d'une masse la plus faible du châssis, la cellule s'étend le plus possible vers l'arrière du véhicule. Il en ressort un accroissement des efforts supportés par le plancher-cabine, notamment tel que susvisé lors de la prise de virage par le véhicule.

Il apparaît dès lors utile de renforcer le plancher-cabine vis-à-vis des efforts qu'il est destiné à subir lors de la progression du véhicule, notamment lorsqu'il est chargé. Cependant un renforcement du plancher-cabine tend à accroître le poids du véhicule, à l'encontre de la démarche inverse d'utiliser un plancher-cabine pour alléger le véhicule.

Par ailleurs, il se pose aussi le problème de l'installation de la cellule sur le plancher-cabine. Les cellules peuvent présenter des agencements divers selon la destination du véhicule, et sont couramment fixées sur le châssis selon leur configuration et/ou leur aménagement intérieur.

Pour permettre une modularité de la fixation de la cellule sur le châssis selon son agencement, la cellule est localement ancrée sur le châssis via des organes de fixation de type par boulons ou vis. Les organes de fixation sont placés en prise sur le plancher-cabine et/ou sur des éléments robustes du châssis après avoir traversés le plancher-cabine, ce qui tend à le fragiliser.

Il apparaît dès lors encore utile de limiter au mieux la fragilisation du plancher-cabine vis-à-vis de la fixation de la cellule sur le châssis.

Il est aussi souhaitable que le montage de la cellule sur le châssis puisse être effectué le plus rapidement possible pour réduire les coûts liés à cette opération, dans le contexte d'une concurrence économiquement sévère dans le domaine des véhicules automobiles. Un tel montage rapide ne doit cependant pas affecter la qualité du positionnement et/ou du maintien de la cellule sur le châssis.

Pour connaître un environnement technologique proche de la présente invention, on pourra par exemple se reporter aux documents FR2563796 (AUTOMOBILES PEUGEOT & AUTOMOBILES CITROEN), WO2007012710 (SAMBULING et al.) et DE102010024764 (DAIMLER AG). Le document JP S55 63971 A divulgue les caractéristiques du préambule de la revendication 1.

Sur la base du constat qui vient d'être fait et dont relève la démarche de la présente invention, celle-ci a pour objet un châssis de véhicule utilitaire automobile qui comprend un plancher-cabine et qui est configuré pour recevoir une cellule rigide en partie arrière du véhicule.

L'invention a aussi pour objet un véhicule utilitaire comprenant un châssis conforme à l'invention, sur lequel est montée une cellule rigide.

Un but de l'invention est de proposer un tel châssis comportant un moyen pour renforcer le plancher-cabine à l'encontre de sa déformation sous l'effet de la progression du véhicule.

Il est plus particulièrement visé de renforcer le plancher-cabine en évitant au mieux d'alourdir le châssis. Il est aussi plus particulièrement visé l'obtention d'un tel renforcement en évitant d'accroître significativement les coûts induits pour ne pas générer un surcoût économiquement rédhibitoire du véhicule au regard des avantages procurés.

Un autre but de l'invention est de permettre un montage rapide de la cellule sur le châssis permettant de réduire les coûts induits par cette opération.

Il est plus particulièrement visé de procurer un tel montage en facilitant le positionnement de la cellule sur le châssis et/ou en procurant son maintien robuste sur le véhicule. Il est aussi plus particulièrement visé l'obtention d'un tel montage en limitant au mieux une fragilisation du plancher-cabine susceptible d'être induite par le montage de la cellule sur le châssis.

Il est dès à présent précisé si besoin les notions relatives communément admises dans le domaine des véhicules automobiles et qui seront appliquées à la description du châssis et du véhicule relevant de la présente invention.

Les notions "longitudinal", "transversal" et "vertical" sont des notions relatives identifiées dans un repère orthonormé pour identifier communément les directions d'extension d'un véhicule automobile et/ou d'un châssis de véhicule automobile.

Les notions « avant » et « arrière » sont des notions relatives définies longitudinalement suivant la direction de progression vers l'avant du véhicule qui est identifiée selon la station du conducteur à bord du véhicule. Le conducteur en station de conduite du véhicule fait face à la direction de progression vers l'avant du véhicule.

Les notions « latéral » ou "transverse" sont identifiées transversalement par les côtés du véhicule automobile répartis de part et d'autre d'un axe longitudinal transversalement médian du véhicule s'étendant entre l'avant et l'arrière du véhicule. Par suite, une direction "latérale" ou "transverse" s'étend perpendiculairement à une direction longitudinale s'étendant entre l'avant et l'arrière du véhicule. Les notions "droite" et "gauche" sont appréciées suivant une direction transverse par rapport à la station du conducteur.

La notion de verticalité est appréciée par rapport au plan de roulage du véhicule automobile et identifie les notions relatives "base" et "sommet" ou "inférieur" et supérieur", ou autres notions apparentées. Par suite, une direction verticale est orientée perpendiculairement au plan de roulage du véhicule et à une direction longitudinale et/ou transversale, les notions "base" ou "inférieur" étant appréciées comme étant plus proches du plan de roulage que les notions "sommet" et "supérieur".

Les buts visés par la présente invention sont atteints isolément ou en combinaison, par application des dispositions qui suivent considérées isolément ou en combinaison.

Le châssis de véhicule utilitaire automobile de l'invention, est configuré pour recevoir une cellule rigide. Le châssis comprend un plancher-cabine fixé au moins sur un soubassement du châssis qui comprend au moins des poutres longitudinales s'étendant respectivement le long des bords latéraux du châssis.

Selon un premier aspect de l'invention, le soubassement comprend des renforts de soutien du plancher-cabine à sa face inférieure. Les renforts sont chacun latéralement encastrés entre une poutre du soubassement et une aile du plancher-cabine qui leurs sont affectées.

Les renforts sont notamment soudés d'une part sur la poutre et d'autre part au plancher-cabine à sa face inférieure et sur l'aile du plancher-cabine. Les ailes du plancher-cabine s'étendent plus particulièrement dans un plan vertical en étant de préférence orientées latéralement vers l'extérieur du châssis. Les ailes du plancher-cabine sont ainsi ménagées aux bords latéraux du plancher-cabine en étant orientés latéralement vers l'extérieur du châssis et en s'étendant perpendiculairement au plan horizontal d'extension du plancher-cabine.

Les renforts sont notamment au moins disposés en bordure des côtés latéraux en zone arrière du plancher-cabine, zone particulièrement sollicitée en torsion lors de la progression du véhicule. Les renforts ménagent ainsi une assise pour le plancher-cabine procurant un soutien vis-à-vis des efforts verticaux qu'il est destiné à subir sous l'effet du poids du chargement transporté notamment logé dans la cellule.

Il est plus particulièrement à relever l'encastrement des renforts entre les poutres et les ailes du plancher-cabine. Les renforts sont chacun configurés en profilé s'étendant verticalement suivant la longueur du profilé. Les profilés sont soudés d'une part à la face inférieure du plancher-cabine et d'autre part transversalement contre la poutre et contre l'aile du plancher-cabine qui leurs sont affectées.

Les poutres et le plancher-cabine forment alors un ensemble robuste via au moins les renforts qui rigidifient le plancher-cabine suivant les trois directions d'un repère orthonormé. Par suite, le plancher-cabine est rigidifié par les renforts, notamment en torsion, à l'encontre des efforts qu'il est amené à supporter lors de la progression du véhicule et/ou sous l'effet du poids de la charge transportée reposant sur le plancher-cabine.

Un tel résultat est atteint sans induire un alourdissement significatif du châssis. Les renforts peuvent être de structures simples et/ou être aisément soudés sur le châssis, en étant notamment chacun formés d'un profilé s'étendant verticalement suivant sa longueur. La résistance du plancher-cabine à l'encontre de sa torsion procurée par les renforts est ainsi obtenue à moindres coûts.

Plus spécifiquement encore, des premières parois de chacun des profilés sont respectivement soudées sur la poutre et sur la face inférieure du plancher-cabine affectées aux renforts, via des retours bordant perpendiculairement l'une de leurs tranches.

Si besoin de préciser, la tranche d'une paroi d'un profilé est typiquement identifiée comme s'étendant suivant un plan dont l'une des dimensions est définie par l'épaisseur de la paroi, ou autrement dit par sa plus petite dimension, et dont l'autre dimension est définie par une quelconque autre de ses dimension. Le profilé s'étendant verticalement suivant sa longueur, la tranche des premières parois est donc définie par leur épaisseur et par leur largeur.

Le profilé présente notamment un profil à au moins trois côtés orientés perpendiculairement les uns par rapport aux autres et s'étendant verticalement pour au moins deux d'entre eux entre la poutre et l'aile du plancher-cabine à distance l'un de l'autre, au moins un troisième côté s'étendant contre l'aile du plancher-cabine ou contre la poutre.

Le profilé formant au moins l'un quelconque des support est donc notamment configuré en polygone ouvert ou fermé, ou encore en chicane ménageant des parois de renvoi s'étendant notamment entre une poutre et une aile du plancher-cabine qui lui sont affectées. Par exemple, le profilé peut être configuré en U, en carré ou en trapèze.

De préférence, les profilés sont chacun configurés en U.

Plus particulièrement, les premières parois de chacun des profilés sont formées par les branches du U soudées à leur extrémité libre sur les poutres affectées aux renforts. Une deuxième paroi des profilés perpendiculaire aux branches du U est soudée sur l'aile du plancher-cabine. L'extrémité libre des branches du U est bien entendu les extrémités des branches qui ne sont pas solidaires de la deuxième paroi du profilé.

Selon un deuxième aspect de l'invention, chacun des renforts comporte au moins un organe de prise configuré pour coopérer avec au moins un organe de fixation dédié au montage de la cellule sur le châssis. Le ou les organes de prise sont notamment configurés pour fixer la cellule suivant les trois directions d'extension du châssis via le ou les organes de fixation.

Il en résulte que le plancher-cabine est préservé des efforts en torsion générés par la cellule qui présente une extension verticale conséquente, notamment lors de la prise de virage par le véhicule, de tels efforts en torsion étant alors supportés par les renforts.

En outre, le positionnement et le maintien de la cellule sur le châssis sont obtenus fiables et performants via les renforts. Les renforts étant intégrés au châssis dans une position déterminée, la cellule peut être équipée de platines de positionnement et de fixation de la cellule respectivement contre l'un et l'autre des renforts. De telles platines peuvent notamment être appliquées contre les parois des renforts orientées latéralement vers l'extérieur du châssis, notamment contre lesdites deuxièmes parois des profilés.

L'installation de la cellule par un opérateur en est aussi simplifiée, et peut être rapidement effectuée à partir d'un positionnement et d'une fixation de la cellule à l'arrière du châssis essentiellement procurée par la mise coopération par l'opérateur entre les organes de prises et les organes de fixation.

Les organes de prise sont notamment configurés pour procurer un verrouillage en position de la cellule sur le support via les organes de fixation, suivant les trois directions longitudinale, transversale et verticale du repère orthonormé définissant les directions d'extension du châssis. La plancher-cabine est ainsi au mieux préservé des contraintes auxquelles il est susceptible d'être soumis quels que soient les mouvements de tangage et/ou de roulis auquel le véhicule est soumis lors de sa progression.

Les organes de prise peuvent présenter une quelconque configuration procurant un tel verrouillage en étant par exemple configurés en organes d'accrochage.

De préférence, au moins eux organes de prise de chacun des renforts sont chacun configurés en un trou s'étendant parallèlement au plan d'extension du plancher-cabine, les trous étant aptes à recevoir des organes de fixation configurés en boulons. On relèvera que les organes de fixation travaillent alors essentiellement en tirant suivant une direction parallèle au plan d'extension du plancher-cabine.

Selon une forme de réalisation, des organes de prise en pluralité d'un quelconque renfort donné sont alignés suivant une direction perpendiculaire au plan d'extension du plancher-cabine. Ceci permet de renforcer l'efficacité du renfort vis-à-vis des efforts en torsion qu'il supporte.

Le châssis est potentiellement équipé de plusieurs renforts répartis le long de chacun de ses bords latéraux. Il est cependant préféré d'éviter d'alourdir le châssis, en plaçant un renfort unique à chacun des bords latéraux du châssis, notamment en zone arrière. Les renforts sont alors de préférence alignés suivant une direction traverse d'extension du châssis, en étant disposés entre un train de roue arrière équipant le châssis et son extrémité arrière. Plus spécifiquement, les renforts sont disposés au plus proche de l'extrémité arrière du châssis, notamment à proximité du bord transverse arrière du plancher-cabine.

Ainsi selon une forme préférée de réalisation, le châssis comprend deux renforts placés respectivement à chacun des bords latéraux du châssis à l'arrière du plancher-cabine, les renforts étant alignés suivant une direction traverse d'extension du châssis.

L'invention a aussi pour objet un véhicule utilitaire automobile comprenant un châssis conforme à l'invention, sur lequel châssis est montée une cellule rigide via au moins les renforts. La cellule est notamment équipée de platines solidarisées aux renforts via les organes de prise et les organes de fixation coopérants.

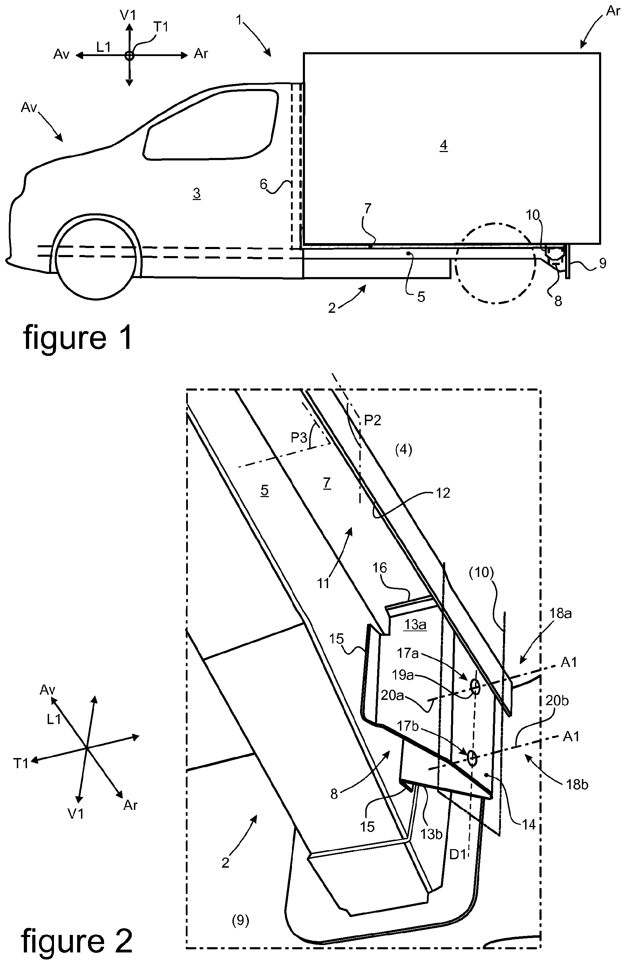

Un exemple de réalisation de la présente invention va être décrit en relation avec les figures de la planche annexée, dans laquelle :
- ) la figure 1 est une représentation de côté d'un véhicule utilitaire automobile illustrant le contexte de l'invention.
- ) la figure 2 est une illustration partielle de dessous en perspective latérale arrière d'un châssis du véhicule utilitaire automobile représenté sur la figure 1.

Les figures et leurs descriptions détaillées exposent l'invention selon de modalités particulières qui ne sont pas restrictives quant à la portée de l'invention telle que définie par les revendications. Les figures et leurs descriptions détaillées peuvent servir à mieux définir l'invention, si besoin en relation avec la description générale qui vient d'en être faite.

Sur la figure 1, un véhicule 1 utilitaire automobile comprend un châssis 2 porteur d'une cabine 3 de conduite à l'avant Av du véhicule 1 et d'une cellule rigide 4 à l'arrière Ar du véhicule 1. L'avant Av et l'arrière Ar du véhicule 1, et donc du châssis 2, sont typiquement identifiés suivant une direction longitudinale L1 d'extension du véhicule 1 et la station du conducteur installé dans la cabine 3 en faisant face vers l'avant Av du véhicule 1.

Le châssis 2 comprend au moins deux poutres 5 latérales qui s'étendent longitudinalement L1 le long du véhicule 1, et donc du châssis 2. Les poutres 5 sont disposées aux bords latéraux du véhicule 1 distants l'un de l'autre suivant une direction transverse T1 qui est parallèle au plan de roulage P1 du véhicule 1, et donc du châssis 2, et qui est perpendiculaire à la direction longitudinale L1.

La cabine 3 est montée sur le châssis 1 via une armature 6, comprenant notamment au moins des montants, voire aussi potentiellement une traverse. Le châssis 2 comprend aussi un plancher-cabine 7 qui s'étend depuis la cabine 3 vers l'arrière Ar du véhicule 1. Le plancher-cabine 7 est installé au moins sur les poutres 5 en étant ancré sur l'armature 6.

La cellule rigide 4 est fixée sur le châssis 2 en surplomb du plancher-cabine 7 suivant une direction verticale V1 d'extension du véhicule 1, et donc du châssis 2. La cellule rigide 4 s'étend en élévation depuis le châssis 2 suivant la direction verticale V1 qui est perpendiculaire à la direction longitudinale L1 et à la direction verticale V1.

Les poutres 5 sont fixées à leur extrémité longitudinale arrière sur une plaque arrière 9 qui relient les poutres 5 entre elles à l'arrière Ar du véhicule 1. La cellule rigide 4 est fixée au châssis 2 via au moins deux renforts 8 respectivement solidarisés aux poutres 5 et au plancher-cabine 7.

Les renforts 8 sont respectivement disposés aux bords latéraux et à l'arrière du châssis 2, en étant alignés suivant la direction transverse T1. La cellule 4 est par exemple munie de platines 10 qui sont respectivement fixées sur les renforts 8 latéralement de part et d'autre du châssis 2. La figure 2 illustre l'agencement et les modalités d'implantation sur le châssis 2 de l'un des renforts 8, qui sont transposables à chacun des renforts 8 pour procurer le renforcement du plancher-cabine 7 et la fixation de la cellule 4 sur le châssis 2.

Sur la figure 2, le renfort 8 est formé d'un profilé en U s'étendant verticalement V1 suivant sa longueur. Le renfort 8 est soudé d'une part à la face inférieure 11 du plancher-cabine 7 et d'autre part en interposition entre la poutre 5 et une aile 12 du plancher-cabine 7. L'aile 12 s'étend verticalement V1 et est formée d'un retour ménagé en bordure latérale T1 du plancher-cabine 7.

Le renfort 8 est encastré transversalement T1 entre la poutre 5 et l'aile 12, contre lesquels le renfort 8 est appliqué. Plus particulièrement, les branches du U forment des premières parois 13a, 13b et sont solidaires à une première de leurs extrémités d'une deuxième paroi 14.

Les premières parois 13a, 13b s'étendent verticalement V1 et transversalement T1 entre la poutre 5 et l'aile 12. La deuxième paroi 14 s'étend verticalement V1 en étant appliquée contre l'aile 12 à son extrémité supérieure et suivant son plan P2 d'extension. Les deuxièmes extrémités libres des premières parois 13a, 13b, opposées à leur première extrémité solidaire de la deuxième paroi 14, sont appliquées contre la poutre 5 via des retours 15 qu'elles comportent.

Les premières parois 13a, 13b comportent chacune des retours 16 ménagés au débouché du profilé orienté vers la face inférieure 11 du plancher-cabine. Les retours 16 permettent de conforter la prise d'appui et le soudage du plancher-cabine contre les premières parois 13a, 13b.

Sur l'exemple illustré, les retours 15, 16 sont de préférence orientés vers l'extérieur du renfort 8. Les retours 15 s'étendent verticalement V1 et longitudinalement L1 en ménageant une première assise favorisant l'application et le soudage contre la poutre 5 des premières parois 13a, 13b le long de la tranche de leurs extrémités libres. Les retours 16 s'étendent latéralement L1 et longitudinalement L1 en ménageant une deuxième assise favorisant l'application et le soudage contre la poutre 5 du renfort 8 à son extrémité soudée à la face inférieure 11 du plancher-cabine 7.

Par ailleurs, le renfort 8 est muni d'organes de prise 17a, 17b qui sont configurés pour coopérer avec des organes de fixation 18a, 18b. La coopération entre les organes de prise 17a, 17b et les organes de fixation 18a, 18b est apte à procurer un positionnement latéral L1 et longitudinal L1, ainsi qu'une fixation, de la cellule 4 sur le châssis 1 via les renforts 8 et la platine 10 dont est munie la cellule 4.

Sur l'exemple illustré, les organes de prise 17a, 17b sont chacun configurés en trou 19a, 19b aptes à coopérer avec des boulons 20a, 20b, schématisés en traits interrompus. Les trous 19a, 19b, et donc les boulons 20a, 20b, s'étendent axialement A1 parallèlement au plan P3 d'extension du plancher-cabine 7, et sont verticalement V1 alignés suivant une direction D1 ou autrement dit sont alignés perpendiculairement au plan P3 du plancher-cabine 7.

## Revendications

1. Châssis (2) de véhicule (1) utilitaire automobile configuré pour recevoir une cellule rigide (4), le châssis (2) comprenant un plancher-cabine (7) fixé au moins sur un soubassement du châssis (2) qui comprend au moins des poutres (5) longitudinales s'étendant respectivement le long des bords latéraux du châssis (2), le soubassement comprenant des renforts (8) de soutien du plancher-cabine (7) à sa face inférieure (11), les renforts (8) étant chacun latéralement encastrés entre une poutre (5) du soubassement et une aile (12) du plancher-cabine (7) qui leurs sont affectées, **caractérisé en ce que** les renforts (8) sont chacun configurés en profilé s'étendant verticalement (V1) suivant la longueur du profilé, les profilés étant soudés d'une part à la face inférieure (11) du plancher-cabine (7) et d'autre part transversalement contre la poutre (5) et contre l'aile (12) du plancher-cabine (7) qui leurs sont affectées.

2. Châssis (2) selon la revendication précédente, **caractérisé en ce que** des premières parois (13a, 13b) de chacun des profilés sont respectivement soudées sur la poutre (5) et sur la face inférieure (11) du plancher-cabine (7) affectées aux renforts (8), via des retours (15) bordant perpendiculairement l'une de leurs tranches.

3. Châssis (2) selon la revendication précédente, **caractérisé en ce que** les profilés sont chacun configurés en U.

4. Châssis (2) selon la revendication précédente, **caractérisé en ce que** les premières parois (13a, 13b) de chacun des profilés sont formées par les branches du U soudées à leur extrémité libre sur la poutre (5) affectée aux renforts (8), une deuxième paroi (14) des profilés perpendiculaire aux branches du U étant soudée sur l'aile (12) du plancher-cabine (7).

5. Châssis (2) selon l'une quelconque des revendications précédentes, **caractérisé en ce que** chacun des renforts (8) comporte au moins un organe de prise (17a, 17b) configuré pour coopérer avec au moins un organe de fixation (18a, 18b) dédié au montage de la cellule (4) sur le châssis (2).

6. Châssis (2) selon la revendication précédente, **caractérisé en ce qu'**au moins deux organes de prise (17a, 17b) de chacun des renforts (8) sont chacun configurés en un trou (19a, 19b) s'étendant parallèlement au plan d'extension (P3) du plancher-cabine (7), les trous (19a, 19b) étant aptes à recevoir des organes de fixation (18a, 18b) configurés en boulons (20a, 20b).

7. Châssis (2) selon l'une quelconque des revendications 5 et 6, **caractérisé en ce que** des organes de prise (17a, 17b) en pluralité d'un quelconque renfort (8) donné sont alignés suivant une direction (D1) perpendiculaire au plan (P3) d'extension du plancher-cabine (7).

8. Châssis (2) selon l'une quelconque des revendications précédentes, **caractérisé en ce que** le châssis (2) comprend deux renforts (8) placés respectivement à chacun des bords latéraux du châssis (2) à l'arrière du plancher-cabine (7), les renforts (8) étant alignés suivant une direction traverse (T1) d'extension du châssis (2).

9. - Véhicule (1) utilitaire automobile **caractérisé en ce qu'**il comprend un châssis (2) conforme à l'une quelconque des revendications précédentes, sur lequel châssis (2) est montée une cellule rigide (4) via au moins les renforts (8).

## Patentansprüche

1. Fahrgestell (2) für ein Kraftfahrzeug (1), das zur Aufnahme einer starren Zelle (4) konfiguriert ist, wobei das Fahrgestell (2) einen Kabinenboden (7) umfasst, der zumindest an einem Untergestell des Fahrgestells (2) befestigt ist, das zumindest Längsbalken (5) umfasst, die sich jeweils entlang der Seitenränder des Fahrgestells (2) erstrecken, wobei das Untergestell Verstärkungen (8) zur Unterstützung des Kabinenbodens (7) an seiner Unterseite (11) umfasst, wobei die Verstärkungen (8) jeweils seitlich zwischen einem Balken (5) des Untergestells und einem Flügel (12) des Kabinenbodens (7) eingebettet sind Sie sind ihnen zugeordnet, **dadurch gekennzeichnet, dass** die Verstärkungen (8) jeweils als sich vertikal entlang der Profillänge erstreckende Profile (V1) ausgebildet sind, wobei die Profile einerseits mit der Unterseite (11) des Kabinenbodens (7) und andererseits quer mit dem ihnen zugeordneten Balken (5) und dem Schenkel (12) des Kabinenbodens (7) verschweißt sind.

2. Rahmen (2) nach dem vorhergehenden Anspruch, **dadurch gekennzeichnet, dass** erste Wände (13a, 13b) jedes der Profile jeweils an den Balken (5) und an die den Verstärkungen (8) zugeordnete Unterseite (11) des Kabinenbodens (7) über senkrecht an eine ihrer Scheiben angrenzende Rücksprünge (15) angeschweißt sind.

3. Rahmen (2) nach dem vorhergehenden Anspruch, **dadurch gekennzeichnet, dass** die Profile jeweils U-förmig ausgebildet sind.

4. Rahmen (2) nach dem vorhergehenden Anspruch, **dadurch gekennzeichnet, dass** die ersten Wände (13a, 13b) jedes der Profile durch die Schenkel des U gebildet sind, die an ihrem freien Ende an den den Verstärkungen (8) zugeordneten Balken (5) angeschweißt sind, wobei eine zweite Wand (14) der Profile senkrecht zu den Schenkeln des U an den Schenkel (12) des Kabinenbodens (7) angeschweißt ist.

5. Rahmen (2) nach einem der vorhergehenden Ansprüche, **dadurch gekennzeichnet, dass** jede der Verstärkungen (8) mindestens ein Greiforgan (17a, 17b) aufweist, das so konfiguriert ist, dass es mit mindestens einem Befestigungselement (18a, 18b) zusammenwirkt, das der Befestigung der Zelle (4) an dem Rahmen (2) gewidmet ist.

6. Rahmen (2) nach dem vorhergehenden Anspruch, **dadurch gekennzeichnet, dass** mindestens zwei Greiforgane (17a, 17b) jeder der Verstärkungen (8) jeweils in einem Loch (19a, 19b) ausgebildet sind, das sich parallel zur Erstreckungsebene (P3) des Kabinenbodens (7) erstreckt, wobei die Löcher (19a, 19b) zur Aufnahme von Befestigungsorganen (18a, 18b) ausgebildet sind, die als Bolzen (20a, 20b) ausgebildet sind.

7. Fahrgestell (2) nach einem der Ansprüche 5 und 6, **dadurch gekennzeichnet, dass** Eingriffselemente (17a, 17b) aus einer Vielzahl von gegebenen Verstärkungen (8) in einer Richtung (D1) senkrecht zu der Ausdehnungsebene (P3) des Kabinenbodens (7) ausgerichtet sind.

8. Rahmen (2) nach einem der vorhergehenden Ansprüche, **dadurch gekennzeichnet, dass** der Rahmen (2) zwei Verstärkungen (8) aufweist, die jeweils an jedem der Seitenränder des Rahmens (2) hinter dem Kabinenboden (7) angeordnet sind, wobei die Verstärkungen (8) in einer Querrichtung (T1) der Ausdehnung des Rahmens (2) ausgerichtet sind.

9. Kraftfahrzeug (1), **dadurch gekennzeichnet, dass** es einen Rahmen (2) nach einem der vorhergehenden Ansprüche umfasst, auf dem ein Rahmen (2) über mindestens die Verstärkungen (8) eine starre Zelle (4) montiert ist.

## Claims

1. A chassis (2) of a motor vehicle (1) configured to receive a rigid cell (4), the chassis (2) comprising a cabin floor (7) fixed at least to a base of the chassis (2) which comprises at least longitudinal beams (5) extending respectively along the lateral edges of the chassis (2), the base comprising reinforcements (8) for supporting the cabin floor (7) on its lower face (11), the reinforcements (8) each being laterally embedded between a beam (5) of the base and a wing (12) of the cabin floor (7) which are assigned to them **characterized in that** the reinforcements (8) are each configured as a profile extending vertically (V1) along the length of the profile, the profiles being welded on the one hand to the lower face (11) of the floor-cabin (7) and on the other hand transversely against the beam (5) and against the wing (12) of the floor-cabin (7) which are assigned to them.

2. Chassis (2) according to the preceding claim, **characterized in that** first walls (13a, 13b) of each of the profiles are respectively welded to the beam (5) and to the lower face (11) of the floor-cabin (7) assigned to the reinforcements (8), via returns (15) bordering perpendicularly one of their edges.

3. Chassis (2) according to the preceding claim, **characterized in that** the sections are each configured in a U-shape.

4. Frame (2) according to the preceding claim, **characterized in that** the first walls (13a, 13b) of each of the sections are formed by the branches of the U welded at their free end to the beam (5) assigned to the reinforcements (8), a second wall (14) of the sections perpendicular to the branches of the U being welded to the flange (12) of the floor-cabin (7).

5. Chassis (2) according to any one of the preceding claims, **characterized in that** each of the reinforcements (8) comprises at least one gripping member (17a, 17b) configured to cooperate with at least one fastening member (18a, 18b) dedicated to the mounting of the cell (4) on the chassis (2).

6. Chassis (2) according to the preceding claim, **characterized in that** at least two engagement members (17a, 17b) of each of the reinforcements (8) are each configured as a hole (19a, 19b) extending parallel to the extension plane (P3) of the floor-cabin (7), the holes (19a, 19b) being able to receive attachment members (18a, 18b) configured as bolts (20a, 20b).

7. Chassis (2) according to either of Claims 5 and 6, **characterized in that** engagement members (17a, 17b) made of a plurality of any given reinforcement (8) are aligned in a direction (D1) perpendicular to the extension plane (P3) of the floor-cabin (7).

8. Chassis (2) according to any one of the preceding claims, **characterized in that** the chassis (2) comprises two reinforcements (8) placed respectively at each of the lateral edges of the chassis (2) at the rear of the cabin floor (7), the reinforcements (8) being aligned in a transverse direction (T1) of extension of the chassis (2).

9. Motor vehicle (1) **characterized in that** it comprises a chassis (2) according to any one of the preceding claims, on which chassis (2) is mounted a rigid cell (4) via at least the reinforcements (8).
